# EUROPÄISCHE PATENTSCHRIFT

(11) **EP 2 200 912 B1**
(45) Veröffentlichungstag und Bekanntmachung des Hinweises auf die Patenterteilung: **05.03.2014**
(21) Anmeldenummer: 08733810.9
(22) Anmeldetag: 23.04.2008
(51) Int. Cl.: B65G 21/20, B65G 19/30

(54) **UMLENKVORRICHTUNG FÜR EIN FÖRDERSYSTEM**
DEFLECTION APPARATUS FOR A CONVEYING SYSTEM
DISPOSITIF DE DÉVIATION POUR SYSTÈME CONVOYEUR

(30) Priorität: 17.09.2007 CH 14482007
(43) Veröffentlichungstag der Anmeldung: 30.06.2010
(60) Teilanmeldung: 11005885.6
(73) Patentinhaber: WRH Walter Reist Holding AG, 8272 Ermatingen (CH)
(72) Erfinder: MÜLLER, Erwin, CH-8635 Dürnten (CH)
(74) Vertreter: Frei Patent Attorneys
(86) Internationale Anmeldenummer: PCT/CH2008/000184
(87) Internationale Veröffentlichungsnummer: WO 2009/036580

(56) Entgegenhaltungen:
- EP-A- 1 340 698
- WO-A-2005/087627
- WO-A1-2006/094423
- DE-C1- 3 726 059
- FR-A- 2 196 281
- US-A1- 2003 194 161

## Beschreibung

Die Erfindung bezieht sich auf das Gebiet der Fördertechnik. Sie bezieht sich insbesondere auf eine Umlenkvorrichtung für ein Fördersystem gemäss dem Oberbegriff des Patentanspruches 1.

### STAND DER TECHNIK

Fördereinrichtungen weisen typischerweise Förderelemente Riemen, Ketten, Seile Bänder, Räder etc. auf, welche im Allgemeinen entlang dreidimensional verlaufenden Bahnen gefördert werden. Dabei werden die Förderelemente durch einen Antrieb gestossen und/oder gezogen. Beim Umfahren von Kurven treten Reibungskräfte auf, welche dem Antrieb entgegenwirken. Zu Reduktion dieser Reibungskräfte ist es beispielsweise aus der WO 99/35063 bekannt, fest montierte Rollen in einem Umlenkbereich anzuordnen. Die Lagerung der Rollen verursacht aber Reibung und Lärm.

Eine andere Umlenkvorrichtung ist beispielsweise aus der DE 101 35 659 A1 bekannt. Darin ist bei einer Fördervorrichtung eine endlose Stützkette vorgesehen, welche eine Seitenbogenkette der Fördervorrichtung in einer Kurve stützt. Dazu sind an der Stützkette vorstehende Tragelemente angebracht, welche gegen die Seitenbogenkette drücken und diese derart stützen. Der Aufbau der gesamten Vorrichtung ist aufwendig.

In der WO 2007/045 105 sind zylindrische Umlenkrollen für ein Seilfördersystem mit zwei parallelen Seilen offenbart. Bei jeder Umlenkung des Seilpaares - egal ob der Umlenkwinkel z.B. 10° oder 180° beträgt - ist ein Umlenkzylinder mit einem entsprechend grossen Durchmesser und damit auch mit einer entsprechenden Massenträgheit erforderlich.

FR 2.196.281 zeigt eine gattungsgemäße Umlenkvorrichtung in einem Fördersystem, bei welcher eine Rollenkette um eine Viertelkreisbahn, Ritzel (pignons) und eine Spannvorrichtung umläuft. In einer anderen Ausführungsform laufen Rollen in Nuten um. Die Rollen sind durch Zwischenelemente mit niedrigem Reibungskoeffizienten voneinander beabstandet. Die Umlenkvorrichtung ist fester Bestandteil eines Kurvenelements einer Förderbahn, welche eine Förderkette (1, 2) trägt. sein. Die Umlenkvorrichtung bildet keine selbständige Baueinheit: bei Demontage der Förderbahn zerfällt auch die Umlenkvorrichtung entlang der 45°-Linie in zwei Hälften (und umgekehrt).

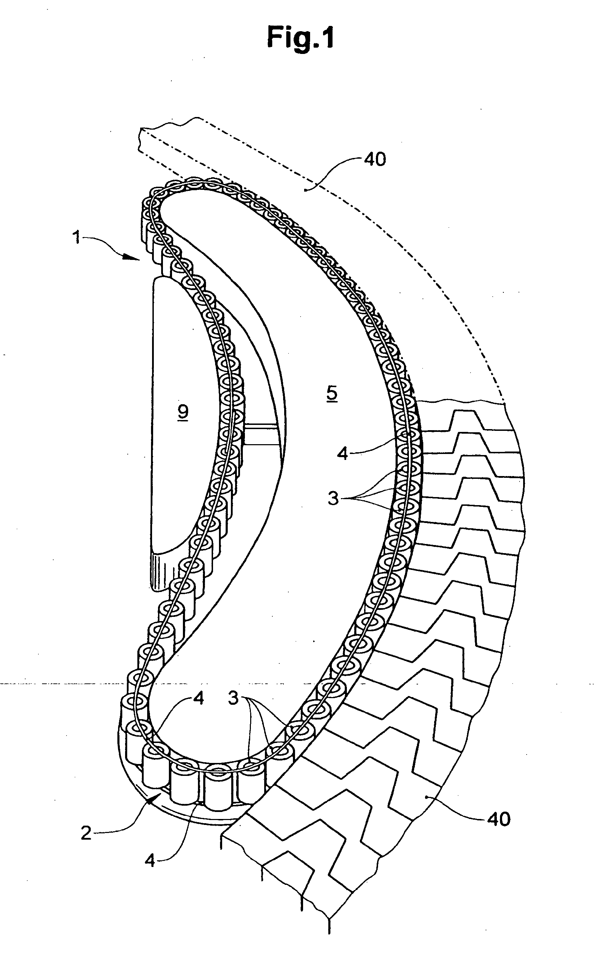

DE 37 26 059 zeigt eine ähnliche Fördererkurve für hohe Belastungen (Kettenkratzförderer) mit einer um-laufenden Rollenkette. Diese läuft um einen gebogenen Bereich, Stützrollen, und eine Spannschiene (Figur 1). Eine Einschnürung der Rollen läuft an einer entsprechenden Vorwölbung der Führung ab. Auch hier ist die Fördererkurve integraler Bestandteil der Förderbahn.

WO 2006/094423 A1 zeigt unter anderem einen Rollenkörper, aufweisend einen Verbindungskörper aus Kunststoff mit eingesetzten Rollen. In der Figur 19 ist eine Anwendung eines solchen Verbindungskörpers in einem Rollenelement gezeigt. Der Verbindungskörper selber Läuft dabei nicht in einer eigenen Führung, sondern der Rollenkörper ist als Einheit in seitlichen Nuten geführt. Dabei reiben sich die Rollen an Kantenbereichen dieser Nuten.

### DARSTELLUNG DER ERFINDUNG

Es ist deshalb Aufgabe der Erfindung, eine Umlenkvorrichtung für ein Fördersystem der eingangs genannten Art zu schaffen, welche die oben genannten Nachteile behebt. Insbesondere ist eine Aufgabe, eine reibungsarme Umlenkvorrichtung zu schaffen, die ferner einen einfachen Aufbau aufweist und günstig in der Herstellung und Montage ist.

Diese Aufgabe löst eine Umlenkvorrichtung für ein Fördersystem mit den Merkmalen des Patentanspruches 1.

In der erfindungsgemässen Umlenkvorrichtung für ein Fördersystem weist die Umlenkvorrichtung einen Zentralkörper mit einem um den Zentralkörper umlaufenden Rollenkörper auf, wobei der Rollenkörper eine Vielzahl von vorzugsweise lose und mit Spiel geführten Rollen aufweist, welche in einer Rollenbahn des Zentralkörpers abrollen, wobei die Umlenkvorrichtung eine selbständige Baueinheit bildet, welche als Einheit montierbar, demontierbar und transportierbar ist, und so als selbständige Baueinheit zur Umlenkung oder zur Abstützung bei einer Richtungsänderung eines Fördermittels in einem Fördersystem einbaubar ist. Das Fördermittel ist beispielsweise ein Förderband aus einem Stück oder aus einzelnen aufeinander folgenden Trägerelementen, oder eine Förderkette oder ein Seilförderer etc. Das Fördermittel rollt also über die Rollen am Zentralkörper ab. Der Druck zwischen Fördermittel und Zentralkörper wird durch die abrollenden Rollen übertragen, ohne dass eine Lagerung der Achsen der Rollen wesentlich belastet wird. Diese Lagerung dient lediglich dazu, die Rollen voneinander zu beabstanden und ihr Herausfallen im unbelasteten Zustand zu verhindern.

Indem die Umlenkvorrichtung eine selbständige Baueinheit ist, welche nur gegen das Fördermittel wirkend montiert werden muss, ohne dass zusätzliche Elemente mit dem Fördermittel verzahnt werden müssen, oder einzeln montiert werden müssen, wird es möglich, modulare Fördersysteme schnell und einfach, wie in einem Baukastensystem, einzurichten und zu modifizieren. Die Umlenkvorrichtung kann als kompakte, autonome Baueinheit gefertigt und geliefert werden. Die Umlenkvorrichtung ist also nicht in die Form des Fördersystems integriert. Insbesondere ist die Umlenkvorrichtung nicht an tragende Elemente des Fördersystems angeformt, sondern von solchen tragenden Elementen demontierbar, ohne dass die tragenden Elemente ihre tragende Funktion verlieren.

Vorzugsweise ist die Umlenkvorrichtung in Leichtbauweise ausgeführt, mit Rollen aus beispielsweise Kunststoff und dem Zentralkörper aus Kunststoff oder Aluminium. Die Rollen können für höhere Belastungen grundsätzlich auch als Vollzylinder oder aus Hülsen aus Aluminium oder aus Stahl(blech) gefertigt sein. Damit wird ein leichtlaufendes System mit geringer Massenträgheit und mit geringen Energieverlusten geschaffen. Da keine nennenswerten Reibkräfte auftreten-Druckkräfte werden durch die Rollen ohne Reibung an einer Achse übernagen - kann die Umlenkvorrichtung ohne Schmiermittel betrieben werden und ist dadurch weniger anfällig auf Verschmutzung.

Die Umlenkvorrichtung kann als Einheit für eine horizontale, vertikale oder schräg im Raum liegende Umlenkung angeordnet werden. In einer bevorzugten Ausführungsform der Erfindung verlaufen die Rollen (entsprechend einem Verlauf des Fördermittels) entlang einer tordierten Bahn. Eine solche Verwindung der Bahn kann in einem geraden oder gekrümmten Bereich der Rollenbahn vorliegen. Es ist dabei auch möglich, das Fördermittel, z.B. eine Kette von starren Förderelementen, zwischen zwei Umlenkvorrichtungen gemäss der Erfindung einzuklemmen und entlang einem in drei Dimensionen im Raum gekrümmten und tordierten Verlauf zu führen.

Die Form der Umlenkvorrichtung wird im Wesentlichen durch die Form des Zentralkörpers definiert, und entspricht dem gewünschten Umlenkwinkel. Der Umlenkwinkel beträgt beispielsweise zwischen 20 Grad und 200 Grad. Entlang dieses Umlenkwinkels, oder, mit anderen Worten, in einem Abrollbereich, wird das Fördermittel durch den Rollenkörper der Umlenkvorrichtung gestützt respektive rollt das Fördermittel am Rollenkörper ab. Vorzugsweise verläuft die Rückführung des Rollenkörpers ausserhalb des Abrollbereiches auf dem kürzesten Wege, oder aber in einer gekrümmten und in etwa zum Abrollbereich parallelen Bahn. Dadurch nimmt die Umlenkvorrichtung im Vergleich zu einer zylindrischen Umlenkvorrichtung wesentlich weniger Platz ein.

Gemäss der Erfindung sind die Rollen in einem Rollenband geführt und voneinander beabstandet. Dabei ist vorzugsweise das Rollenband mittels eines Spannkörpers gegen den Zentralkörpers spannbar, wobei der Spannkörper feststchend ist und das Rollenband mit den Rollen am Spanrzkörper abrollt. Der Spannkörper weist also keine beweglichen Teile auf und kann einstückig geformt sein. Damit liegt eine konstruktive sehr einfache und doch reibungsarme Spannvorrichtung vor.

In einer weiteren bevorzugten Ausführungsförm der Erfindung ist der Spannkörper mit einer Halterung am Zentralkörper montiert, und bildet der Zentralkörpers mit dem Rollenband und dem Spannkörper eine selbständige Baueinheit, welche als Einheit montierbar, demontierbar und transportierbar ist.

Vorzugsweise ist das Rollenband aus einem flexiblen Flachmaterial gefertigt, insbesondere aus einem Gewebeband oder kunststoffdurchsetzten Gewebe. Weitere bevorzugte einsetzbare Ausführungsformen von Rollenbändern sind in der WO 2006/094423 offenbart, insbesondere in den Figuren 8 bis 18 und dem entsprechenden Abschnitten der Beschreibung, deren Inhalt hiermit in seiner Gesamtheit durch Verweis aufgenommen ist. Beispielsweise kann ein Rollenband zwischen den Halterungen der Rollen auch eine vorzugsweise mittige Einschnürung aufweisen, so dass das Rollenband auch um eine Achse senkrecht zur Ebene des Rollenbandes, biegbar ist.

Vorzugsweise weist das Rollenband Ausnehmungen mit Lagervorsprüngen auf, und sind die Rollen mit, Einbuchtungen in die Lagervorsprünge eingesetzt und so lose durch die Lagervorsprünge gelagert. Die Rollen sind zylindrisch geformt, oder vorzugsweise leicht bombiert, also tonnenförmig, wobei die Rollenbahn korrespondierend konkav geformt ist. Dadurch werden axiale Kräfte - bei vertikaler Anordnung der Rollen entspricht dies im Wesentlichen nur dem Gewicht der Rollen an die Rollenbahn übertragen, ohne dass die Rollen an ihrer Stirnseite mit der Rollenbahn in Berührung kommen und sich reiben.

In einer anderen bevorzugten Ausführungsform der Erfindung weist das Rollenband als Rollen Kugeln auf. Die Kugeln sind vorzugsweise in flachen Lagerelementen aus beispielsweise Kunststoff wie Nylon, welche im Rollenband gehalten sind, eingeknipst oder eingeschnappt. Es sind insbesondere zwei oder mehr solcher Rollenbänder um den Zentralkörper umlaufend angeordnet. Diese zwei oder mehreren Rollenbänder verlaufen, zumindest im Abrollbereich, im wesentlichen parallel oder mit gleich bleibendem Abstand zueinander. Trägerelemente des Fördersystems weisen hier Abrollnuten auf, welche über die Kugeln passen und an diesen abrollen. Dazu sind die Träger vorzugsweise relativ nahe aufeinander folgend an den Seilen angeordnet, insbesondere so, dass die zwischen den Trägern liegenden und ein Polygon bildenden Abschnitte der Seile nicht die Umlenkvorrichtung berühren.

Gemäss der Erfindung verläuft das Rollenband mit seinen beiden äusseren Kanten in einer Bandführungsnut des Zentralkörpers und ist dadurch geführt und am Herausfallen gehindert. Die Bandführungsnut verhindert also das Herausfallen des Rollenkörpers aus dem Zentralkörper. Die Bandführungsnut ist in einem Teil des Zentralkörpers geformt und bildet im Prinzip einen um den Zentralkörper umlaufenden Schlitz, wobei aber der Rollenkörper im Bereich des Spannkörpers zum Teil frei, also nicht in der Bandführungsnut verläuft, um das Einstellen des Spannkörpers zu ermöglichen.

Vorzugsweise weisen die Rollen, ähnlich wie die bereits erwähnte bombierten Ausführungsform, zur Übertragung von axialen Kräften an den Zentralkörper Ausformungen auf, und weist die Rollenbahn korrespondierend geformte Ausformungen auf.

In einer bevorzugten Ausführungsform der Erfindung werden die Rollen durch mindestens einen um den Zentralkörper umlaufenden und and den Rollen abrollenden Riemen gegen den Zentralkörper gehalten. Die geförderten Träger des Fördermittels wiederum weisen Ausnehmungen oder Nuten auf, in welche die abrollenden Riemen hineinpassen. Ebenso weisen die Rollen konkave Rollenabschnitte auf, in welchen der mindestens eine umlaufende Riemen verläuft, und weist der Zentralkörper korrespondierende Führungsvorsprünge auf. Die Rollen sind somit durch das Eingreifen der Führungsvorsprünge in die konkaver Rollenabschnitte in axialer Richtung gehalten. Die Führungsvorsprünge sind durch eine Ausformung an einer Rollenbahn des Zentralkörpers gebildet, oder durch weitere, stillstehende, Riemen oder Seile, die in eine Nut der Rollenbahn gelegt sind.

Vorzugsweise ist zwischen den Rollen und dem Förderband ein Schutzmittel angeordnet, welches an den Rollen abrollt und den Rollenkörper an mehreren Seiten, vorzugsweise an drei Seiten umschliesst. Dadurch werden die Rollen vor Verschmutzung geschützt. In einer bevorzugten Ausführungsform der Erfindung wird das Schutzmittel durch eine Folge von Stegelementen gebildet, welche dicht aufeinander folgend und einander berührend an den Rollen abrollen. Entsprechend allfälligen Ausformungen (Nuten oder Wülste) an den Rollen weisen auch die Stegelemente oder allgemein das Schutzmittel korrespondierende Ausformungen zur Übertragung von Axialkräften auf.

In einer anderen Ausführungsform der Erfindung liegt lediglich ein Band vor, das an der Aussenseite des Rollenkörpers den Rollenkörper umschliesst. Im Bereich der Umlenkung an der Förderstrecke liegt somit das Band zwischen dem Rollenkörper und den umgelenkten Förderelementen oder -Körpern. Dadurch wird ein Rattern derselben an den Rollen des Rollenkörpers stark verringert oder eliminiert.

In einer weiteren bevorzugten Ausführungsform der Erfindung ist der Zentralkörper im Baukastensystem aus standardisierten Sektorelementen aufgebaut. Ein einzelnes Sektorelement führt um einen Winkel von beispielsweise 15° oder 30° oder 45°, und die Sektorelemente lassen sich aneinander reihen und verbinden, um um einen grösseren Winkel herum zu führen. Vorzugsweise weist der Zentralkörper auch Endelemente auf, welche das Heranführen des Rollenkörpers an die Rollenbahn respektive das Wegführen von der Rollenbahn und das Umlenken des Rollenkörpers von der respektive zur Rückführung bewirken. Ein Zentralkörper wird in diesem Fall durch zwei Endelemente und eines oder mehrere Sektorelemente gebildet. Mit nur drei oder mehr verschiedenen Elementen lassen sich somit Zentralkörper zusammensetzen, die um einen (mit Abstufungen) vorgegebbaren Umlenkwinkel herum führen. Die einzelnen Sektorelemente können wiederum aus Einzelteilen bestehen, beispielsweise einem einem oder mehreren Mittenkörpern, der sandwichartig zwischen zwei Bandführungskörpern angeordnet ist, oder einem Ober- und einem Unterkörper, welche jeweils eine Bandführung aufweisen und, aufeinandergelegt, einen Sektor des Zentralkörpers bilden. Die Einzelteile verschiedener Sektorelemente (Mittenkörper und Bandführungskörper, oder Oberkörper und Unterkörper) können die Einzelteile benachbarter Sektorelemente oder Endelemente überlappen, um eine stabile Verbindung zu ermöglichen. Bestimmte Einzelteile können sich auch um den ganzen Umlenkwinkel erstrecken, beispielsweise eine Abrollplatte, welche als Rollenbahn wirkt. Eine solche Abrollplatte aus flexiblem Material, beispielsweise Kunststoff, kann als Meterware vorliegen und bei Bedarf entsprechend dem gewünschten Umlenkwinkel abgelängt werden.

Zur Montage einer Umlenkvorrichtung werden, entsprechend dem vorgegebenen Umlenkwinkel, die nötige Anzahl von Sektorelementen zusammen mit zwei Endelementen ausgewählt. Ein Band mit eingesetzten Rollen, als Endlosband hergestellt und geliefert, wird auf die benötigte Länge abgelängt. Die Enden des Bandes werden miteinander verbunden (also z.B. verschweisst, verklebt und/oder vernäht). Das Band wird beim Zusammenbau der ausgewählten Elemente in die Bandführungsnuten eingelegt. Das Spiel des Bandes in den Bandführungsnuten gleicht allfällige Längendifferenzen aus.

In einer bevorzugten Ausführungsform der Erfindung weist die Umlenkvorrichtung, insbesondere gemäss dem beschriebenen Baukastensystem, keine Spannvorrichtung auf. Vorzugsweise verläuft dabei die Rückführung des Rollenkörpers im wesentlichen äquidistant zum Bereich, in welchem der Rollenkörper entlang des Fördermittels läuft. Damit ist eine besonders platzsparende und elegante Ausführung möglich.

In weiteren bevorzugten Ausführungsformen der Erfindung ist der Zentralkörper in seiner Form verstellbar und ist dadurch ein Umlenkwinkel der Umlenkvorrichtung verstellbar. Beispielsweise sind die folgenden Realisierungen dieser Verstellbarkeit möglich:
- Der Zentralkörper weist mindestens zwei Sektoren auf, wobei jeder Sektor aus einer Anzahl von ebenen Lamellen besteht, die parallel zueinander angeordnet sind und an einer Seite mit ihren Stirnseiten gemeinsam einen gekrümmten Abrollbereich bilden. Zwei Sektoren können, mit alternierenden Lamellen, ineinander hineingeschoben werden, ähnlich wie bei einem Drehkondensator. Je nachdem, wie weit sie ineinandergeschoben sind ist der Umlenkwinkel grösser oder kleiner.
- Es weist der Zentralkörper im Abrollbereich eine Folge von geraden oder leicht gekrümmten Segmenten auf, die gegeneinander verstellbar sind, und als Gesamtheit einen Umlenkwinkel durch eine Folge von Einzelabschnitten bilden.
- Es ist der ganze Zentralkörper, oder nur ein dünner Teil des Zentralkörpers, welcher die Rollenbahn bildet, aus einem flexiblen Material gebildet. Dieses wird in einer bestimmten Winkelkonfiguration eingespannt, und kann gelöst und mit einem anderem Winkel wieder eingespannt werden.

Die Länge des Rollenkörpers ist jeweils beispielsweise durch ein Spannelement ausgleichbar.

Ein Verfahren zur Herstellung eines Rollenkörpers zur Verwendung in einer der genannten Umlenkvorrichtungen weist vorzugsweise die folgenden Schritte auf:
- Bilden eines Rollenbandes durch Ausschneiden von Ausnehmungen mit Lagervorsprüngen aus einem streifenförmigen Flachmaterial;
- Einsetzen von Rollen in die Ausnehmungen, wobei die Lagervorsprünge in Einbuchtungen der Rolle zu liegen kommen;
- Bilden eines geschlossenen Kreises durch Überlappen der beiden Enden des Rollenbandes (wobei eine Überlappung um den Bereich von einer Rolle oder mehreren Rollen vorliegt);
- Vorzugsweise miteinander Verkleben oder Verschweissen oder aneinander Heften oder Nähen der optional überlappenden Enden des Rollenbandes.

Alternativ können - je nach Material des Rollenbandes, die Enden auch stumpf miteinander verschweisst werden.

Alle genannten Kombinationen von Rollen und Rollenbändern oder Riemen und ihre Ausformungen sind grundsätzlich auch in Systemen einbaubar, ohne dass eine Umlenkvorrichtung als separate Baueinheit vorliegt. Die ist beispielsweise in Wendelförderern der Fall, bei denen der Rollenkörper längs eines Förderbandes entlang einer Spirale aufsteigt und anschliessend wieder zurückgeführt wird, oder bei anderen komplizierten und langen Verläufen.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figuren 1 und 2: Ansichten einer Umlenkvorrichtung für ein Förderband;
- Figur 3: einen Querschnitt durch einen Abrollbereich mit einer Führung eines Rollenbandes;
- Figur 4: eine Aufsicht auf einen Abschnitt eines Rollenbandes, mit teilweise eingesetzten Rollen;
- Figur 5: eine Umlenkvorrichtung mit einem tordierten Verlauf;
- Figuren 6 bis 8: eine Umlenkvorrichtung mit einem Rollenkörper mit umlaufenden Riemen.
- Figuren 9 und 10: eine Umlenkvorrichtung mit in einer Nut geführten Rollen;
- Figur 11: eine Umlenkvorrichtung mit einem Kugelband als Rollenkörper;
- Figur 12: eine Umlenkvorrichtung mit einem Schutzmittel zur Abdeckung der Rollen;
- Figur 13: Umlenkvorrichtungen aus modular zuammensetzbaren Elementen; und
- Figur 14: einen Aufbau eines Teilabschnittes einer Umlenkvorrichtung aus modularen Elementen.

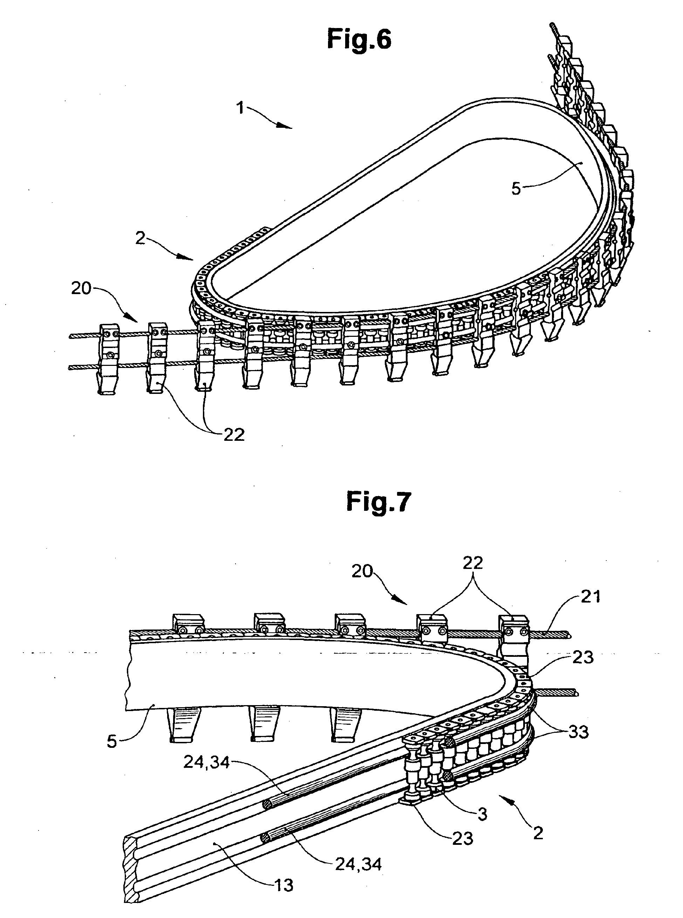

Die Ausführungsformen der Figuren 6 - 9 und 12 mit Distanzierungskörpern sind kein Teil der vorliegenden Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

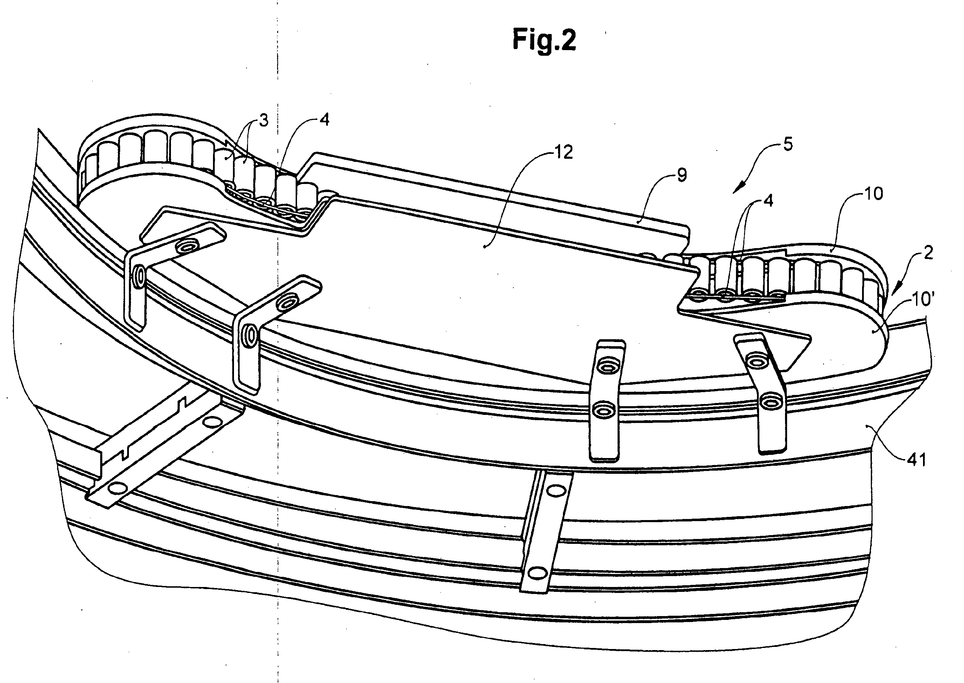

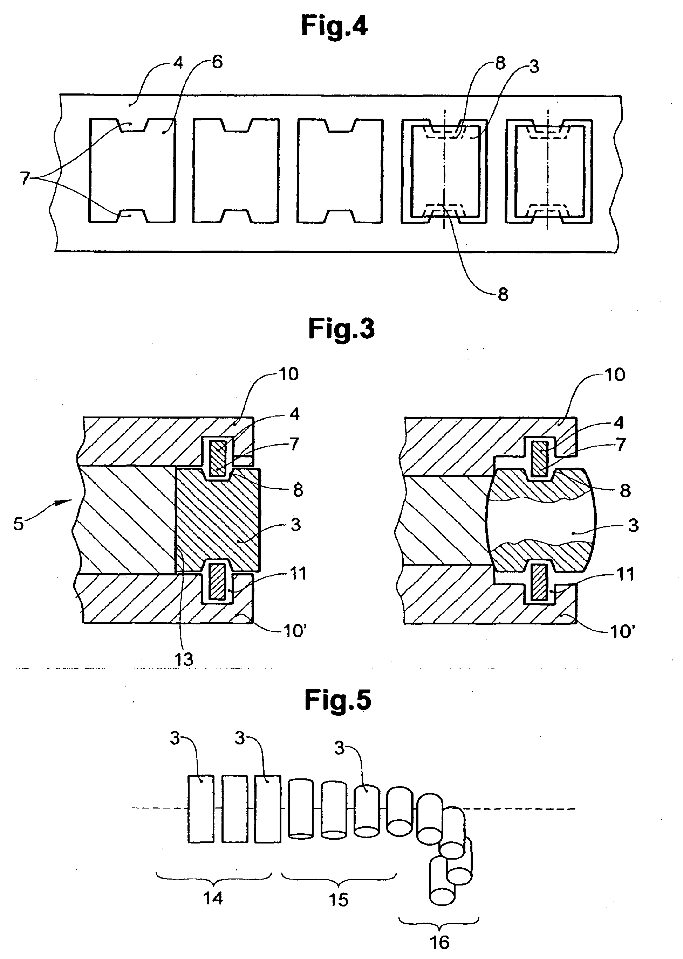

**Figuren 1** und **2** zeigen Ansichten einer Umlenkvorrichtung 1 für ein Förderband 40. Die Umlenkvorrichtung 1 weist einen Zentralkörper 5 auf, um welchen umlaufend ein Rollenkörper 2 angeordnet ist. Der Rollenkörper 2 verläuft in einem Abrollbereich zwischen dem Zentralkörper 5 und dem Förderband 40 und rollt bei einer Bewegung des Förderbandes 40 an einer Rollenbahn 13 des Zentralkörpers 5 ab. Dabei überträgt der Rollenkörper 2 mit seinen Rollen 3 Druckkräfte senkrecht zur Rollenbahn 13. Dadurch werden die Kräfte, die zur Richtungsänderung des Förderbandes 40 erforderlich sind, mit minimaler Reibung aufgenommen. Die einzelnen Rollen 3 sind in einem umlaufenden Rollenband 4 gelagert. Das Rollenband 4 ist in der **Figur** 1 nur schematisch durch seine Ober- und Unterseite dargestellt, der genaue Aufbau des Rollenbandes 4 ist aus den **Figuren 3** und **4** ersichtlich. Das Rollenband 4 ist in einer Führung des Zentralkörpers 5 geführt, die in der **Figur 1** ebenfalls nicht dargestellt ist. Diese Führung ist durch eine Bandführungsnut 11 in jeweils einem in der **Figur 2** dargestellten oberen und einem unteren Bandführungskörper 10, 10' realisiert. Diese Bandführungskörper 10, 10' sind Bestandteil des Zentralkörpers 5 und sind beispielsweise als separate Teile ("Deckel" und "Boden") auf einen Mittenkörper des Zentralkörpers 5 montiert. **Figur 2** zeigt ferner eine Halterung 12, welche einerseits den Spannkörper 9 verstellbar mit dem Zentralkörper 5 verbindet, und andererseits eine Montage der Umlenkvorrichtung 1 als gesamte, selbständige Baueinheit an einer Führung 41 des Förderbandes 40 ermöglicht.
**Figur 3** zeigt Querschnitte durch einen Abrollbereich mit der Führung eines Rollenbandes 4 in der Bandführungsnut 11. Es ist auch ersichtlich, wie die Rollen 3 einerseits an der Rollenbahn 13 am Zentralkörper 5 abrollen, und andererseits auf der äusseren Seite über den Zentralkörper 5 respektive die Bandführungskörper 10, 10' hervorstehen. Dadurch ist gewährleistet, dass das Förderband 40 nur mit den Rolle 3 in Kontakt kommt und nicht am Zentralkörper 5 schleift. Alternativ können, mit der gleichen Wirkung, auch die Rollen 3 länger als die Höhe des Förderbandes 40 gestaltet sein. In der Ausführungsform gemäss der linken Darstellung sind die Rollen 3 zylindrisch und rutschen (wenn die Umlenkvorrichtung 1 wie gezeichnet orientiert ist) aufgrund ihres Eigengewichtes mit ihrem unteren Ende auf dem unteren Bandführungskörper 10'. Falls die Umlenkvorrichtung 1 zur vertikalen Abstützung eingesetzt sind, verlaufen die Achsen der Rollen 3 horizontal und tritt dieses Abrutschen nicht auf. In der Ausführungsform gemäss der rechten Darstellung sind die Rollen 3 bombiert oder tonnenförmig und werden durch die Spannung des Rollenkörpers 2 gegen die Rollenbahn 13 gezogen. Dadurch sind die Rollen 3 bezüglich der Rollenbahn 13 zentriert und rutschen nicht auf dem Bandführungskörper 10.
**Figur 4** zeigt eine Aufsicht auf einen Abschnitt eines Rollenbandes 4, mit teilweise eingesetzten Rollen 3. Das Rollenband 4 weist aufeinander folgende Ausnehmungen 6 auf, wobei jede Ausnehmung 6 bei beiden Seiten des Bandes jeweils einen nach innen weisenden Lagervorsprung 7 aufweist. Die Rollen 3 sind an ihren axialen Enden mit Einbuchtungen 8 versehen, so dass die Lagervorsprünge 7 des flexiblen Rollenbandes 4 in die Einbuchtungen 8 einschnappen oder eingeführt werden können. Das Rollenband 4 ist einerseits derart flexibel, dass es zum Umfahren des Zentralkörpers 5 gebogen werden kann, und andererseits stabil oder steif genug, dass die Rollen 3 nach dem Einsetzen in die Ausnehmungen 6 durch die Lagervorsprünge 7 gehalten sind. Die Lagervorsprünge 7 nehmen in der Regel nur das Eigengewicht der Rollen 3 auf.
**Figur 5** zeigt beispielhaft und schematisch einen tordierten Verlauf von Rollen 3 in einer Umlenkvorrichtung, wobei nur die Rollen 3 eingezeichnet sind. In einem ersten Bereich 14 ist der Rollenkörper 2 nur um eine Achse parallel zu den Rollenachsen gebogen. In einem tordierten Bereich 15 ist der Rollenkörper 2 um seine Längsachse tordiert oder verdreht, und entsprechend auch die Rollenbahn. In einem zweiten Bereich 16 ist der Rollenkörper 2 wieder um eine Achse parallel zu den Rollenachsen gebogen. Durch die dazwischenliegende Torsion folgt, dass die Rollenachsen im ersten und im zweiten Bereich nicht parallel zueinander verlaufen. Mit einem Rollenband 4 mit nur einer mittigen Verbindung zwischen den Rollen (anstelle der Verbindung gemäss der **Figur 4****,** welche durch die ganze Breite des Rollenbandes 4 gebildet ist) ist eine noch freiere, dreidimensional variierende Führung der Rollenbahn möglich.
**Figuren 6** bis **8** zeigen eine Umlenkvorrichtung 1 mit einem Rollenkörper 2 mit um den Rollenkörper 2 umlaufenden Riemen oder Seilen 33. Die Riemen 33 halten dadurch die Rollen 3 gegen den Zentralkörper 5. Als beispielhafte korrespondierende Fördervorrichtung ist ein Seilförderer 20 gezeigt. Bei diesem sind Träger 22 an zwei parallelen Seilen 21 befestigt und werden dadurch geführt und transportiert. Die Träger 22 weisen Abrollnuten 29 auf, deren Form und Abstand mit jener der Riemen 33 korrespondiert. Dadurch sind die Träger 22 beim Abrollen an den Rollen 3 oder beim Entlangfahren an den Riemen 33 in Richung parallel zu den Rollenachsen gestützt.
   Die Rollen 3 sind hier anstelle eines Rollenbandes durch Distanzierungskörper 23 voneinander beabstandet. Die Distanzierungskörper 23 sind an den beiden Enden der Rollen 3 angebracht und stehen in Laufrichtung über die Rollen 3 hervor, vorzugsweise jedoch nicht in der Richtung senkrecht zur Laufrichtung. Die Distanzierungskörper 23 verhindern, dass sich die gleichsinnig drehenden Rollen 3 berühren und aneinander reiben. Alternativ können die Distanzierungskörper 23 auch im Bereich der Mitte der Rollen 3 vorliegen. Die Distanzierungskörper 23 einer Rolle 3 sind gegenüber der Rolle drehbar gelagert. Da diese Lagerung nur die Kräfte zur Beabstandung der Rollen aufnimmt, tritt keine nennenswerte Reibung auf und sind Gleitlager ausreichend.
   Zur Aufnahme der Riemen 33 weisen die Rollen 3 konkave Rollenabschnitte 25 auf, in welche die Riemen 33 hineinpassen. Auch die Rollenbahn 13 weist Führungsvorsprünge 24 oder eingelegte, unbewegliche Seile oder weitere Riemen 34 auf, deren Form mit jender der konkaven Rollenabschnitte 25 korrespondiert. Dadurch werden axiale Kräfte an die Rollen 3 auf den Zentralkörper 5 übertragen und werden die Rollen 3 bezüglich des Zentralkörpers 5 gestützt.

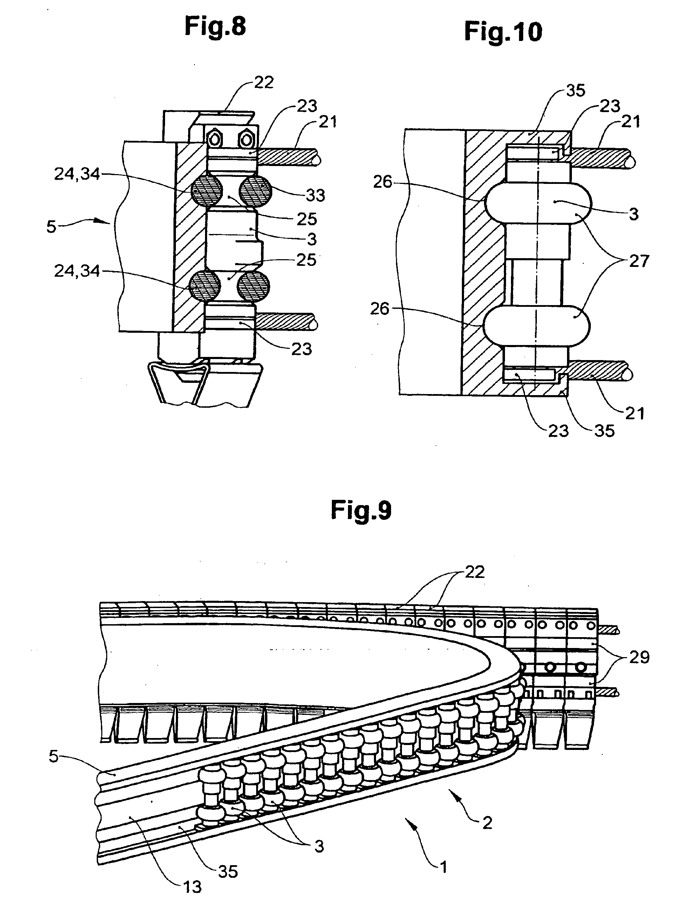

**Figuren 9** und **10** zeigen eine Umlenkvorrichtung 1 mit in einer Nut geführten und so um den Zentralkörper 5 umlaufenden Rollen. Da hier keine Riemen zum Zusammenhalten des Rollenkörpers 2 vorliegen, sind die Rollen 3 mit ihren Achsen (oder indirekt über die Distanzierungskörper 23) in Haltenuten 35 geführt, welche das Herausfallen der Rollen 3 verhindern. Analog zur vorherigen Ausführungsform weisen die Rollen 3 konvexe Rollenabschnitte 27 auf, und die Rollenbahn 13 korrespondierende Führungsnuten 26 und die Träger 22 korrespondierende Abrollnuten 29.

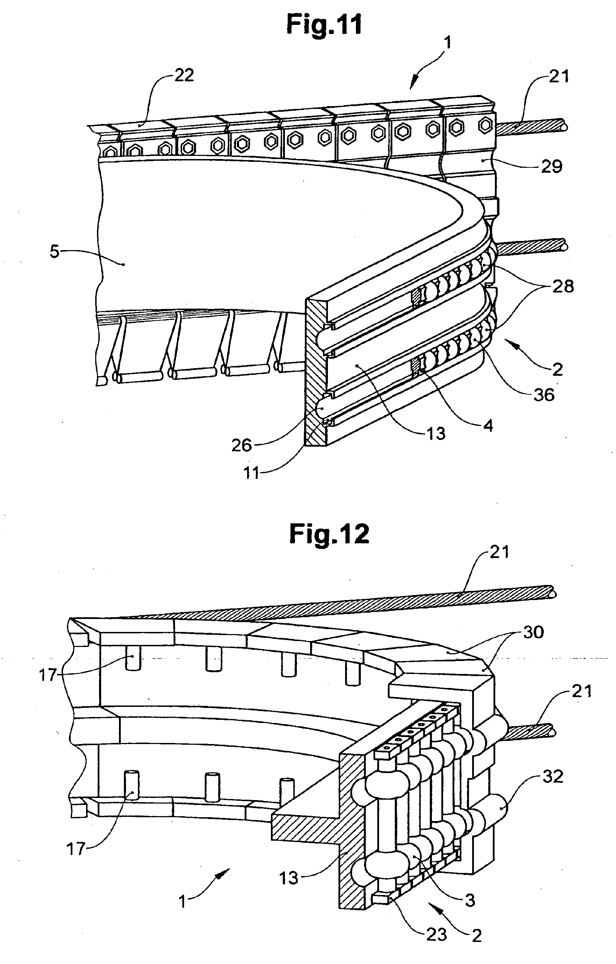

**Figur 11** zeigt eine Umlenkvorrichtung 1 mit einer um den Zentralkörper 5 umlaufenden Kugelkette 28 als Rollenkörper 2. Die Kugelkette 28 ist vorzugsweise wie das oben erwähnte Rollenband 4 gefertigt, jedoch ist zur Lagerung der Kugeln 36 vorzugsweise ein Zwischenkörper aus hartem Kunststoff in das Band eingesetzt. Es liegen vorzugsweise zwei in konstantem Abstand in jeweils einer Führungsnut 26 geführte Kugelketten 28 vor. Zusätzlich ist jede Kugelkette 28 durch Bandfiihrungsnuten 11, welche das Band von beiden Seiten umfassen, vor dem Herausfallen gesichert.

**Figur 12** zeigt eine Umlenkvorrichtung 1 mit einem Schutzmittel 30 zur Abdeckung der Rollen 3. Ein solches Schutzmittel ist bei allen bisher gezeigten Ausführungsformen der Erfindung einsetzbar, wird hier aber nur anhand eines Beispiels illustriert. Das Schutzmittel ist durch eine Folge von U-förmigen Stegelementen 30 gebildet. Diese umschliessen die Rollen 3 und einen Teil des Zentralkörpers 5 und schützen so die abrollenden Teile vor Verschmutzung. Halteelemente, Rollen oder Haltestifte 17 der Stegelemente 30 umgreifen die Rollenbahn 13 und halten die Stegelemente 30 gegen die Rollen 3 fest. Die Stegelemente 30 gleiten oder rollen damit teilweise an der Rückseite der Rollenbahn 13, rollen an den Rollen 3 ab, und die Träger 22 oder andere Elemente des Fördersystems bewegen sich im Abrollbereich mit den umlaufenden Stegelementen 30 mit. Zur Stützung der (nicht gezeichneten) Träger weisen die Stegelemente 30 Ausbuchtungen 32 auf, und auf der Innenseite weitere Ausformungen, welche wie in den bisherigen Ausführungsformen zur Abstützung mit der Form der Rollen 3 korrespondieren.

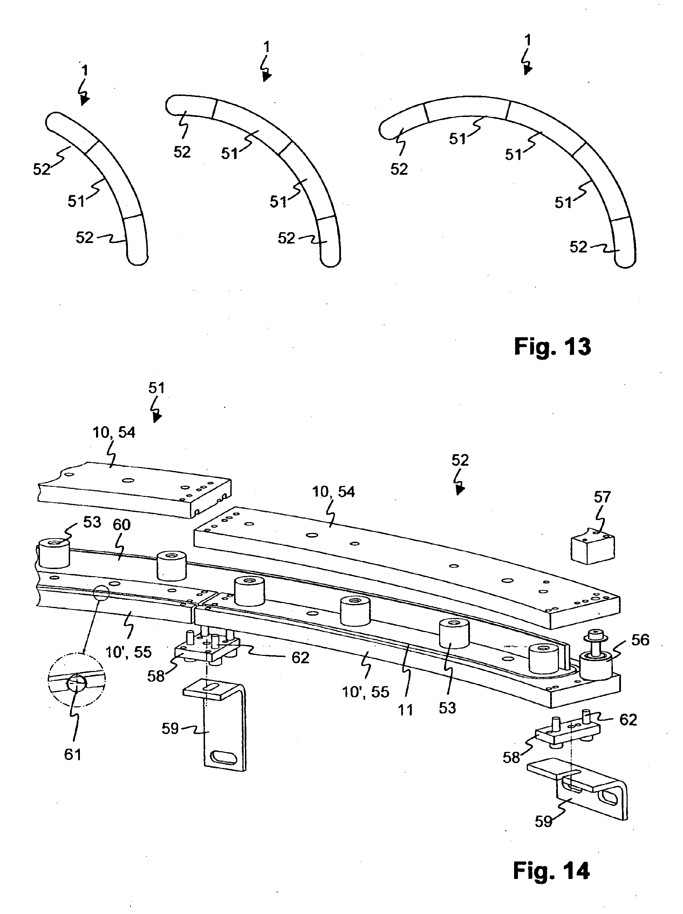

**Figur 13** zeigt schematisch Umlenkvorrichtungen 1 mit verschiedenen Umlenkwinkeln, welche aus modular zuammensetzbaren Elementen, d.h. in diesem Fall, Sektorelementen 51 und Endelementen 52 zusammensetzbar sind. Ein Satz aus modularen, Elementen weist beispielsweise keines, eines oder mehrere Sektorelemente 51, zwei Endelemente 52, ein entsprechend des Umlenkwinkels auf Mass abgelängtes Rollenband 4, optional sich über alle Elemente erstreckende feststehende Komponenten 60 sowie Verbindungs- und Befestigungselemente auf. Die Sektorelemente 51 und Endelemente 52 können selber auch wieder aus mehreren Komponenten 53, 54, 55 bestehen.
**Figur 14** zeigt einen weiter detaillierten Aufbau eines Teilabschnittes einer aus modularen Elementen zusammensetzbaren Umlenkvorrichtung 1 in einer bevorzugten Ausführungsform der Erfindung: Ein Sektorelement 51 wie auch ein Endelement 52 weisen jeweils einen Oberkörper 54 und einen Unterkörper 55 auf. Diese wiederum weisen jeweils eine Bandführungsnut 11 auf und sind durch einen oder mehrere Mittenkörper voneinander distanziert. Der Mittenkörper wird in der gezeigten Ausführungsform durch mehrere Distanzierungselemente 53 gebildet, kann aber auch durch einen einzigen Block gebildet, oder an einen Oberkörper 54 oder einen Unterkörper 55 angeformt sein. In den Endelementen 52 bildet die Bandführungsnut 11 jeweils eine Kurve, welche das Rollenband 4 von einem Abrollbereich (in welchem die geförderten Körper am Rollenband 4 abrollen) in einen Rückführungsbereich umleiten. Im Bereich dieser Kurve ist vorzugsweise auch eine Kurvenabschlussrolle 56 oder ein Kurvenabschlussgleitstück 57 angeordnet, welche die geförderten Gegenstände an das Rollenband 4 hin oder vom Rollenband 4 weg führen. Im Rückführungsbereich verläuft die Bandführungsnut 11 und damit das Rollenband 4 vorzugsweise äquidistant zur Bandführungsnut 11 im Abrollbereich.

Die Rollenbahn 13 wird hier durch eine Rollbahn 60 aus einem flächigen und flexiblen Material gebildet, welche in Haltenuten der Oberkörper 54 und Unterkörper 55 eingesetzt und gehalten ist. Die Rollbahn 60 erstreckt sich über und verbindet die einzelnen Sektorelemente 51 und Endelemente 52 und bildet somit eine über alle Sektoren durchgehende Rollenbahn 13. So entstehen keine Absätze zwischen den Sektoren.

Die einzelnen Elemente sind durch Verbindungsplatten 58 mit Stiften oder Schrauben 62 oder anderen Verbindungsmitteln miteinander verbunden. An den Verbindungsplatten 58 können ferner auch Befestigungswinkel 59 zur Befestigung der Umlenkvorrichtung 1 an einer Fördervorrichtung angebracht werden.

Eine Bahnöffnung oder Weiche 61 ist schematisch in einer Detailansicht der **Figur 14** dargestellt. Eine solche Weiche 61 bildet eine verschliessbare Öffnung in den Seitenwänden der oberen und der unteren Bandführungsnut 11, so dass das Rollenband 4 auch ohne Demontage der Umlenkvorrichtung 1 ein- und ausgebaut werden kann. Dabei ist das Rollenband 4 beispielsweise beim Einbau zunächst noch nicht zu einer Schleife geschlossen und wird zuerst durch die Weiche 61 in die Rollenbahn 13 eingefädelt. Anschliessend wird das Rollenband 4, in der Rollenbahn 13 liegend, zu einer Schleife verbunden.

Die einzelnen Elemente (wie Rollenkörper, Rollen, Seile, Distanzierungskörper, Rollenbahn etc.) und deren verschiedene Varianten können in weiteren bevorzugten Ausführungsformen auch in anderer Weise miteinander kombiniert werden. Ferner können die Umlenkvorrichtungen 1 auch als Spannmittel zum Spannen von bewegten Fördermitteln wie z.B. Förderbänder eingesetzt werden, oder zur Kraftübertragung zum Antrieb solcher Fördermittel. Vorzugsweise wird aber die Umlenkvorrichtung 1 nicht angetrieben sondern passiv durch die Fördervorrichtung 40 mitbewegt.

**BEZUGSZEICHENLISTE**

| | | | |
|---|---|---|---|
| 1 | Umlenkvorrichtung | 28 | Kugelkette |
| 2 | Rollenkörper | 29 | Abrollnut an Träger |
| 3 | Rolle | 30 | Stegelement |
| 4 | Rollenband | 31 | Einbuchtung |
| 5 | Zentralkörpers | 32 | Ausbuchtung |
| 6 | Ausnehmung | 33 | Riemen |
| 7 | Lagervorsprung | 34 | weiterer Riemen |
| 8 | Einbuchtung | 35 | Haltenut |
| 9 | Spannkörper | 36 | Kugel |
| 10, 10' | Bandführungskörper | 40 | Förderband |
| 11 | Bandführungsnut | 41 | Führung des Förderbandes |
| 12 | Halterung | 51 | Sektorelement |
| 13 | Rollenbahn | 52 | Endelement |
| 14 | erster Bereich | 53 | Distanzierungselement |
| 15 | tordierter Bereich | 54 | Oberkörper |
| 16 | zweiter Bereich | 55 | Unterkörper |
| 17 | Haltestift | 56 | Kurvenabschlussrolle |
| 20 | Seilförderer | 57 | Kurvenabschlussgleitstück |
| 21 | Seil | 58 | Verbindungsplatte |
| 22 | Träger | 59 | Befestigungswinkel |
| 23 | Distanzierungskörper | 60 | Abrollplatte |
| 24 | Führungsvorsprung | 61 | Weiche |
| 25 | konkaver Rollenabschnitt | 62 | Verbindungsstifte |
| 26 | Führungsnut | | |
| 27 | konvexer Rollenabschnitt | | |

## Patentansprüche

1. Umlenkvorrichtung (1) für ein Fördersystem, wobei die Umlenkvorrichtung aufweist einen Zentralkörper (5) mit einem um den Zentralkörper (5) umlaufenden Rollenkörper (2), wobei der Rollenkörper (2) eine Vielzahl von mit Spiel geführten Rollen (3) aufweist, welche in einer Rollenbahn (13) des Zentralkörpers (5) abrollen, **dadurch gekennzeichnet, dass** die Umlenkvorrichtung (1) eine selbstständige Baueinheit bildet, welche als Einheit montierbar, demontierbar und transportierbar ist, und so als sebständige Baueinheit zur Umlenkung eines Fördermittels (20,40) in dem Fördersystem einbaubar ist, und dass die Rollen (3) in einem Rollenband (4) geführt und voneinander beabstandet sind und das Rollenband (4) mit seinen beiden äusseren Kanten in einer Bandführungsnut (11) des Zentralkörpers (5) verläuft und dadurch geführt und am Herausfallen gehindert ist.

2. Umlenkvorrichtung (1) für ein Fördersystem germäss Anspruch 1, wobei die Umlenkvorrichtung (1) in Leichtbauweise ausgeführt ist, insbesondere mit Rollen (3) aus Kunststoff und dem Zentralkörper (5) aus Kunststoff oder Aluminium.

3. Umlenkvorrichtung (1) für ein Fördersystem gemäss einem der bisherigen Ansprüche, wobei das Rollenband (4) mittels eines vorzugsweise einstückigen Spannkörpers (9) gegen den Zentralkörper (5) spannbar ist, wobei der Spannkörper (9) feststehend ist und das Rollenband (4) mit den Rollen (3) am Spannkörper (9) abrollt.

4. Umlenkvorrichtung (1) für ein Fördersystem gemäss einem der Ansprüche 1 bis 3, wobei das Rollenband (4) aus einem flexiblen Flachmaterial gefertigt ist.

5. Umlenkvorrichtung (1) für ein Fördersystem gemäss einem der Ansprüche 1 bis 4, wobei das Rollenband (4) aus einem Gewebe oder einem kunststoffgetränkten Gewebe gefertigt ist.

6. Umlenkvorrichtung (1) für ein Fördersystem gemäss einem der Ansprüche 1 bis 5, wobei das Rollenband (4) als Rollen Kugeln (36) aufweist, und zwei solcher Rollenbänder (4) um den Zentralkörper (5) umlaufend angeordnet sind.

7. Umlenkvorrichtung (1) für ein Fördersystem gemäss einem der bisherigen Ansprüche, wobei die Rollen (3) durch mindestens einen umlaufenden Riemen (33) gegen den Zentralkörper (5) gehalten werden.

8. Umlenkvorrichtung (1) für ein Fördersystem gemäss einem der bisherigen Ansprüche, wobei zwischen den Rollen (3) und dem Förderband (40) ein Schutzmittel angeordnet ist, welches an den Rollen (3) abrollt und den Rollenkörper (2) an mehreren Seiten umschliesst.

9. Umlenkvorrichtung (1) für ein Fördersystem gemäss einem der bisherigen Ansprüche, wobei der Zentralkörper (5) in seiner Form verstellbar ist und dadurch ein Umlenkwinkel der Umlenkvorrichtung (1) verstellbar ist.

10. Umlenkvorrichtung (1) für ein Fördersystem gemäss einem der Ansprüche 1 bis 8, wobei der Zentralkörper (5) mehrere modulare Elemente (51, 52) aufweist, welche jeweils einen Sektor entsprechend einem Teil-Umlenkwinkel bilden, und mit mehreren solcher modularer Elemente (51, 52) Zentralkörpers (5) für Umlenkvorrichtungen (1) mit unterschiedlichen Umlenkwinkeln zusammensetzbar sind.

## Claims

1. A deflection apparatus (1) for a conveying system, wherein the deflection apparatus comprises a central body (5) with a roller body (2) circulating around the central body (5), wherein the roller body (2) comprises a multiplicity of rollers (3), which are guided with play and which roll off in a roller track (13) of the central body (5), **characterized in that** the deflection apparatus (1) forms an independent structural unit, which allows it to be mounted, dismounted and transported, and thus to be installed as an independent structural unit in the conveying system for the deflection of a means of conveyance (20, 40), and that the rollers (3) are guided in a roller belt (4) and are distanced from one another, and the roller belt (4) runs with its two outer edges in a belt-guiding groove (11) of the central body (5) and by way of this is guided and prevented from falling out.

2. The deflection apparatus (1) for a conveying system according to claim 1, wherein the deflection apparatus (1) is configured in a lightweight design, in particular with rollers (3) made from plastic and the central body (5) made from plastic or aluminium.

3. The deflection apparatus (1) for a conveying system according to one of the preceding claims, wherein the roller belt (4) can be tensioned against the central body (5) by way of a preferably one-piece tensioning body (9), wherein the tensioning body (9) is stationary and the roller belt (4) rolls off the tensioning body (9) by means of the rollers (3).

4. The deflection apparatus (1) for a conveying system according to any one of claim 1 to 3, wherein roller belt (4) is manufactured of a flexible flat material.

5. The deflection apparatus (1) for a conveying system according to any one of claims 1 to 4, wherein the roller belt (4) is manufactured from a fabric or plastic-impregnated fabric.

6. The deflection apparatus (1) for a conveying system according to any one of claims 1 to 5, wherein the roller belt (4) comprises balls (36) as rollers, and two such roller belts (4) are arranged around the central body (5) in a circulating manner.

7. The deflection apparatus (1) for a conveying system according to one of the preceding claims, wherein the rollers (3) are held against the central body (5) by at least one circulating belt (33).

8. The deflection apparatus (1) for a conveying system according to one of the preceding claims, wherein arranged between the rollers (3) and the conveyor belt (40) is a protective means, which rolls on the rollers (3) and encompasses the roller body (2) on several sides.

9. The deflection apparatus (1) for a conveying system according to one of the preceding claims, wherein the central body (5) is adjustable in its form and thus a deflection angle of the deflection apparatus (1) is adjustable.

10. The deflection apparatus (1) for a conveying system according to any one of claim 1 to 3, wherein the central body (5) comprises several modular elements (51, 52), each of which forms a sector corresponding to a part deflection angle and, by means of several such modular elements (51, 52), it is possible to assemble central bodies (5) for deflection apparatuses (1) with differing deflection angles.

## Revendications

1. Dispositif (1) de renvoi pour système de transport, le dispositif de renvoi présentant un corps central (5) doté d'un corps de roulement (2) entourant le corps central (5), le corps de roulement (2) présentant plusieurs galets (3) guidés avec jeu et roulant dans une piste de roulement (13) du corps central (5), **caractérisé en ce que**
le dispositif (1) de renvoi forme une unité autonome qui peut être montée, démontée et transportée en tant qu'entité et qui peut ainsi être intégrée dans le système de transport en tant qu'unité autonome pour assurer le renvoi d'un moyen de transport (20, 40),
**en ce que** les galets (3) sont guidés et maintenus à distance mutuelle dans une bande de roulement (4) et
**en ce que** les deux bords extérieurs de la bande de roulement (4) s'étendent dans une rainure (11) de guidage de bande du corps central (5) de telle sorte que la bande de roulement est guidée et empêchée de se dégager.

2. Dispositif (1) de renvoi pour système de transport selon la revendication 1, dans le quel le dispositif (1) de renvoi est réalisée en matériaux légers et en particulier dans lequel les galets (3) sont réalisés en matière synthétique et le corps central (5) en matière synthétique ou en aluminium.

3. Dispositif (1) de renvoi pour système de transport selon l'une des revendications précédentes, dans lequel la bande de roulement peut être serrée sur le corps central (5) à l'aide d'un corps de serrage (9) de préférence d'une seule pièce, le corps de serrage (9) étant fixe et la bande de roulement (4) roulant sur le corps de serrage (9) avec les galets (3).

4. Dispositif (1) de renvoi pour système de transport selon l'une des revendications 1 à 3, dans lequel la bande de roulement (4) est réalisée en un matériau flexible plat.

5. Dispositif (1) de renvoi pour système de transport selon l'une des revendications 1 à 4, dans lequel la bande de roulement (4) est réalisée en tissu ou en tissu imprégné de matière synthétique.

6. Dispositif (1) de renvoi pour système de transport selon l'une des revendications 1 à 5, dans lequel la bande de roulement (4) présente comme galets des billes (36), deux de ces bandes de roulement (4) étant disposées autour du corps central (5).

7. Dispositif (1) de renvoi pour système de transport selon l'une des revendications précédentes, dans lequel les galets (3) sont maintenus contre le corps central (5) par au moins une courroie périphérique (33).

8. Dispositif (1) de renvoi pour système de transport selon l'une des revendications précédentes, dans lequel un moyen de protection qui roule sur les rouleaux (3) et qui englobe le corps de roulement (2) sur plusieurs côtés est disposé entre les galets (3) et la bande transporteuse (40).

9. Dispositif (1) de renvoi pour système de transport selon l'une des revendications précédentes, dans lequel la forme du corps central (5) est ajustable, l'angle de renvoi du dispositif (1) de renvoi pouvant ainsi être ajusté.

10. Dispositif (1) de renvoi pour système de transport selon l'une des revendications 1 à 8, dans lequel le corps central (5) présente plusieurs éléments modulaires (51, 52) qui forment chacun un secteur correspondant à une partie de l'angle de renvoi, des corps centraux (5) prévus pour des dispositifs (1) de renvoi présentant différents angles de renvoi pouvant être formés par assemblage de plusieurs de ces éléments modulaires (51, 52).
